# EUROPEAN PATENT SPECIFICATION

(11) **EP 3 150 560 B1**
(45) Date of publication and mention of the grant of the patent: **07.02.2024**
(21) Application number: 16002011.1
(22) Date of filing: 15.09.2016
(51) Int. Cl.: C02F 1/70, C02F 1/66, C02F 1/72, C02F 101/16, C02F 103/02, B01J 23/26

(54) **USE OF A NITROGEN MONOXIDE DECOMPOSING UNIT**
VERWENDUNG EINER EINHEIT ZUR STICKSTOFFMONOXID-ZERSETZUNG
USAGE D'UNE UNITÉ DE DÉCOMPOSITION DE MONOXYDE D'AZOTE

(30) Priority: 01.10.2015 JP 2015195750
(43) Date of publication of application: 05.04.2017
(73) Proprietor: Mitsubishi Heavy Industries, Ltd., Tokyo 100-8332 (JP)
(72) Inventor: Hirota, Mamoru, Tokyo, 100-8280 (JP); Fukuhara, Hirotsugu, Yokohama, 220-8401 (JP)
(74) Representative: Strehl Schübel-Hopf & Partner

(56) References cited:
- EP-A1- 2 395 130
- EP-A1- 2 415 904
- EP-A1- 2 600 352
- DE-A1- 4 207 959

## Description

### FIELD OF THE INVENTION

The present invention relates to waste water treatment and condensate water treatment of a plant such as a thermal power plant, in particular a technology effectively applicable to the prevention of corrosion caused by nitrous oxide included in waste water or condensate water.

### BACKGROUND OF THE INVENTION

In a thermal power generation system, electricity is generated by heating condensate water, thus generating steam, and rotating a steam turbine by the heated steam. A carbon steel or a low-alloy steel, which is a low corrosion resistant material, is used for a feed water heater installed on a route from a condenser to a boiler or a boiler. In order to inhibit the corrosion of such a low corrosion resistant material, the quality of feed water is important and all volatile treatment or oxygenated treatment is applied to feed water in an ordinary power generation system.

The all volatile treatment is a processing method of adjusting a dissolved oxygen concentration to less than 7 µg/l by adding ammonia (NH₃) and hydrazine (N₂H₄) to feed water. In contrast, the oxygenated treatment is a processing method of adjusting a dissolved oxygen concentration to 20 to 200 ppb by adding ammonia and a small amount of oxygen (O₂) to feed water. In either of the water processing methods therefore, ammonia is added to feed water.

Meanwhile, a main steam temperature in a thermal power generation system has been steadily rising from the view point of power generation efficiency improvement. Although the highest temperature of steam stays at 620°C at present, the development of various kinds of heat-resistant materials advances and the temperature is expected to rise to 700°C or higher by the application of a heat-resistant material in the future.

As a technology related to condensate water treatment in a plant such as a power plant, there is a technology disclosed in Japanese Unexamined Patent Application Publication No. 2003-117568. Japanese Unexamined Patent Application Publication No. 2003-117568 discloses "a method for processing nitrogen compound containing water by bringing the nitrogen compound containing water into contact with a catalyst under the existence of an oxidant, thus reacting a nitrogen compound with the oxidant, and thereby oxidizing and decomposing the nitrogen compound.

EP 2 600 352 A1, EP 2 415 904 A1 and EP 2 395 130 A1 describe corrosion-suppression coatings deposited on surfaces of structural members of a plant that come into contact with water.

### SUMMARY OF THE INVENTION

Meanwhile, when ammonia is exposed to a high temperature, oxidation or decomposition is caused with a metal or a metal oxide acting as a catalyst. As stated above, in a thermal power plant, ammonia is added into feed water and the ammonia is exposed to a high temperature exceeding 600°C at a heater or reheater. At such a high temperature, ammonia reacts with oxygen or metal oxide and nitrogen monoxide (NO) is generated in accordance with the expression (1).
[Numerical Expression 1]

4NH₃+5O₂→4NO+6H₂O (1)

Then, the generated nitrogen monoxide coexists with water as a steam temperature drops and turns to be nitrous acid (HNO₂) in the water in accordance with the expression (2). The site where the steam temperature drops and water is generated is a low-pressure turbine or a feed water heater.
[Numerical Expression 2]

2H₂O+2NO→2H⁺+2NO₂⁻+H₂ (2)

When the nitrous acid turns to ammonia in the low-pressure turbine or the feed water heater in accordance with the expression (3), the anodic reaction of metal (metal dissolution) is accelerated because the chemical change of the nitrous acid to ammonia is a cathodic reaction.
[Numerical Expression 3]

NO₂⁻+5H₂O+3Fe→NH₃+7OH⁻+3Fe²⁺ (3)

Further, because nitrogen monoxide tends to be generated as a steam temperature rises, the corrosion of a low-pressure turbine or a feed water heater is accelerated further if the future rise of a steam temperature to 700°C or higher is taken into consideration.

In a stainless steel, pitting corrosion or stress corrosion cracking, which is local corrosion, is likely to be generated because nitrous acid raises the corrosion potential of metal existing in water. In a carbon steel or a low-alloy steel likewise, the generation of general corrosion or pitting corrosion is accelerated. In this way, if nitrous acid exists in steam-condensed water, the arising problem is that the corrosion of a plant is accelerated and the action of deteriorating the reliability or shortening the service life of the plant is caused. Consequently, a nitrous acid concentration in steam-condensed water has to be lowered to the greatest possible extent.

In Japanese Unexamined Patent Application Publication No. 2003-117568, the decomposition of nitrous acid is advanced by adding ammonia to nitrate- and nitrite-nitrogen in water. In consideration of the chemical reaction of a reaction molecule on a catalyst surface, the chemical reaction is influenced by a mobile velocity to the catalyst surface. The mobile velocity of a molecule is extremely larger in a gas phase of a low density than in water. Consequently, a satisfactory effect is hardly obtained even when the technology of liquid phase reaction in Japanese Unexamined Patent Application Publication No. 2003-117568 is applied to the reaction in such a steam-condensed water (gas phase) as stated above.

In view of the above situation, an object of the present invention is, in a plant such as a thermal power plant, to prevent the corrosion of a piping member or a device such as a boiler by effectively decomposing nitrogen monoxide (NO) included in waste water or condensate water and inhibiting nitrous acid (HNO₂) from being generated.

In order to solve the problem, the present invention provides the use of a nitrogen monoxide cracking unit in a feed water system or a waste water system of a plant as defined in claim 1.

The present invention makes it possible to inhibit the corrosion of a piping member or a device such as a boiler, a low-pressure turbine, or a feed water heater caused by nitrous acid (HNO₂) in a plant such as a thermal power plant.

In a stainless steel, the generation of pitting corrosion and crevice corrosion as well as further stress corrosion cracking can be inhibited.

Further, in a carbon steel or a low-alloy steel, general corrosion, pitting corrosion, and crevice corrosion can be inhibited.

Furthermore, a carbon steel or a low-alloy steel can be used and a plant manufacturing cost can be reduced by applying the present invention also to a device that has heretofore been requiring or will hereafter require a stainless steel to be applied in order to avoid corrosion caused by nitrous acid.

Additionally, water quality degradation of feed water can be prevented and the corrosion of a boiler caused by nitrous acid can be inhibited by preventing the nitrous acid from being brought in the feed water of the boiler from a feed water heater.

In addition, the load of a condensate water desalination unit can be reduced and thus the reduction of regeneration frequency and the degradation of a resin can be prevented by preventing nitrous acid from being brought in condensate water from a low-pressure turbine.

The problems, configurations, and effects other than those stated above will be obvious from the explanations on the following embodiments.

### BRIEF DESCRIPTION OF THE DRAWINGS

Fig. 1 is a schematic diagram of a thermal power generation system according to an embodiment of the present invention;
Fig. 2 is a graph showing the relationship between a steam temperature and a nitrous acid concentration;
Fig. 3 is a graph showing the relationship between a nitrous acid concentration and a corrosion rate;
Fig. 4 is a graph showing the relationship between a nitrous acid concentration and a pitting corrosion growth rate;
Fig. 5 is a view showing a piping member according to an embodiment of the present invention;
Fig. 6 is a view showing a nitrogen monoxide cracking unit according to an embodiment of the present invention;
Fig. 7 is a view showing a nitrogen monoxide cracking unit according to an embodiment of the present invention; and
Fig. 8 is a view showing a nitrogen monoxide cracking unit according to an embodiment of the present invention.

### DETAILED DESCRIPTION OF THE PREFERRED EMBODIMENTS

Embodiments according to the present invention are explained hereunder in reference to drawings. Here, in the respective drawings, an identical configuration is represented with an identical code and a detailed explanation on an overlapping part is omitted.

### [First Embodiment]

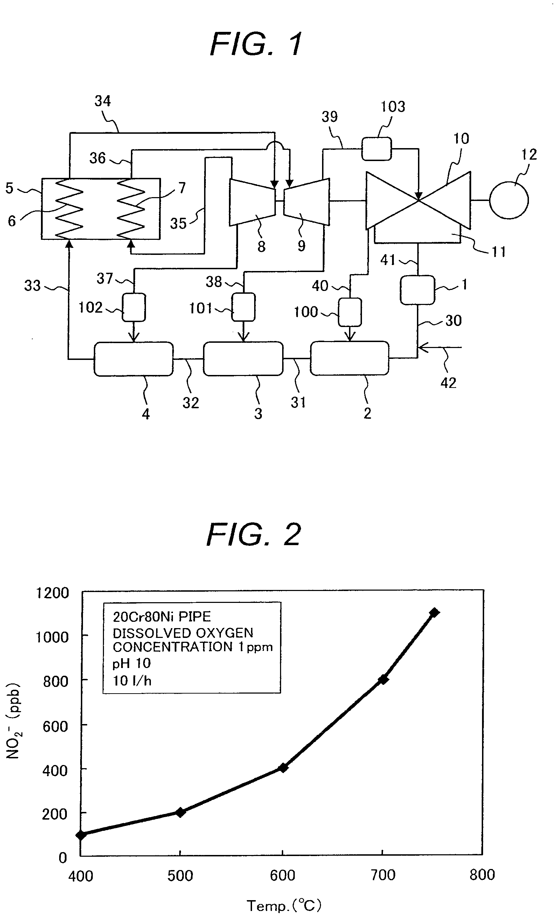

Fig. 1 shows the schematic diagram of a thermal power generation system. Firstly as feed water, pure water not containing impurities is obtained by passing turbine condensate water scarcely containing dissolved oxygen through a condensate water desalination unit 1.

Successively, in all volatile treatment, ammonia (NH₃) and hydrazine (N₂H₄) which are pH adjusters are added from a chemical injection system (chemical injection point 42) to the feed water coming from the condensate water desalination unit 1, pH is adjusted to 8.0 to 10, and a hydrazine concentration is adjusted to 10 ppb or more. In oxygenated treatment, ammonia (NH₃) which is a pH adjuster and oxygen (O₂) are added from the chemical injection system (chemical injection point 42) to the feed water coming from the condensate water desalination unit 1, pH is adjusted to 8.0 to 10, and an oxygen concentration is adjusted to 20 to 150 ppb.

Then the feed water is heated at a low-pressure feed water heater 2, a deaerator 3, and a high-pressure feed water heater 4, is sent to a boiler 5, and comes to be supercritical water of 400°C or higher. Successively, the feed water is further heated up to 600°C at a heater 6 and enters a high-pressure turbine 8. Steam having left the high-pressure turbine 8 is heated again up to 620°C at a reheater 7, is sent to an intermediate pressure turbine 9 and further to a low-pressure turbine 10, generates electricity at a power generator 12, and then finally returns to turbine condensate water.

At the low-pressure feed water heater 2, the deaerator 3, and the high-pressure feed water heater 4, the feed water is heated by the steam extracted from the steam turbines. The low-pressure feed water heater 2, the deaerator 3, and the high-pressure feed water heater 4 heat the feed water by the steam extracted from the low-pressure turbine 10, the intermediate pressure turbine 9, and the high-pressure turbine 8, respectively.

Here, in order to decompose nitrogen monoxide (NO) in the steam entering the low-pressure feed water heater 2, a nitrogen monoxide cracking unit 100 is installed in a pipe 40 ranging from the steam extraction of the low-pressure turbine 10 to the entrance of the low-pressure feed water heater 2 and the nitrogen monoxide (NO) entering the low-pressure feed water heater 2 is decomposed.

Likewise, a nitrogen monoxide cracking unit 101 is installed in a pipe 38 ranging from the steam extraction of the intermediate pressure turbine 9 to the entrance of the deaerator 3 and the nitrogen monoxide (NO) entering the deaerator 3 is decomposed.

Likewise, a nitrogen monoxide cracking unit 102 is installed in a pipe 37 ranging from the steam extraction of the high-pressure turbine 8 to the entrance of the high-pressure feed water heater 4 and the nitrogen monoxide (NO) entering the high-pressure feed water heater 4 is decomposed.

Likewise, a nitrogen monoxide cracking unit 103 is installed in a pipe 39 ranging from the intermediate pressure turbine 9 to the entrance of the low-pressure turbine 10 and the nitrogen monoxide (NO) entering the low-pressure turbine 10 is decomposed.

In order to inhibit the low-pressure turbine 10, the low-pressure feed water heater 2, and the high-pressure feed water heater 4 from being corroded by nitrous acid (HNO₂), the nitrogen monoxide (NO) that changes to nitrous acid (HNO₂) in condensed water can be decomposed by reacting nitrogen monoxide (NO) with ammonia (NH₃) in a gaseous phase and forming nitrogen (N₂) and water (H₂O) in accordance with the expression (4) before they enter the devices.
[Numerical Expression 4]

6NO(g)+4NH₃(g)⇔5N₂+6H₂O(g) (4)

The decomposition reaction of nitrogen monoxide (NO) is likely to advance when a pressure is reduced as low as possible because the reaction is expansion reaction. Further, because the sites where steam condenses are the low-pressure turbine 10 and the feed water heaters such as the low-pressure feed water heater 2 and the high-pressure feed water heater 4, it is effective to carry out the decomposition reaction of nitrogen monoxide (NO) before the steam enters the low-pressure turbine 10 and the feed water heaters where the pressure comes to be the lowest.

It is very effective therefore to give the new function of advancing the decomposition reaction of nitrogen monoxide: in the pipe 39 leading from the intermediate pressure turbine 9 to the low-pressure turbine 10 in the case of the low-pressure turbine 10; and in the respective pipes leading from the respective turbines to the respective feed water heaters in the case of the feed water heaters.

The decomposition reaction of nitrogen monoxide can be advanced by either applying a material having a high catalytic effect for reducing nitrogen monoxide to a pipe itself or applying a substance having a catalytic effect on a surface. As the materials having a high catalytic effect, there are metal elements such as chromium (Cr), copper (Cu), cobalt (Co), nickel (Ni), magnesium (Mg), manganese (Mn), zinc (Zn), vanadium (V), titanium (Ti), aluminum (Al), ruthenium (Ru), and iron (Fe) and the metal oxides of those. Further, in order to increase reaction efficiency, methods of increasing a surface area and reducing a flow rate and facilitating reaction are conceivable.

Fig. 2 shows the relationship between a nitrous acid concentration and a steam temperature when steam containing ammonia flows in a chromium-nickel alloy pipe simulating a reheater 7. It is obvious that ammonia is oxidized and nitrous acid is generated as the steam temperature rises. Consequently, it is estimated that nitrous acid is generated in main steam and reheated steam in a real plant too.

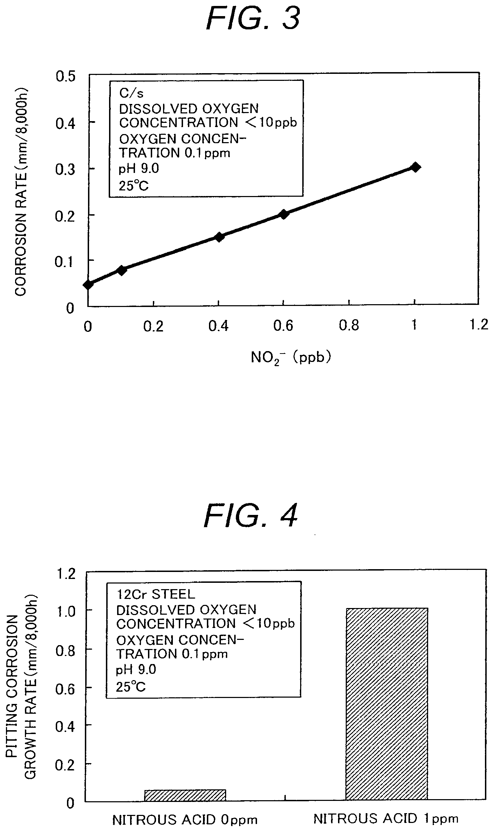

Fig. 3 shows the relationship between a nitrous acid concentration and a corrosion rate in a carbon steel. A carbon steel scarcely corrodes in an environment of a low oxygen concentration. It is obvious, however, that corrosion is accelerated when nitrous acid exists slightly in water. Consequently, it is estimated that the heat-transfer pipes in the feed water heaters such as the low-pressure feed water heater 2 and the high-pressure feed water heater 4 include carbon steel and hence corrode when nitrous acid exists in condensed water.

Fig. 4 shows the influence of nitrous acid on a pitting corrosion growth rate in the crevice corrosion test of a 12Cr-steel. In the test, the depth of pitting corrosion in a crevice formed when two sheets of 12Cr-steel are immersed in the state of overlapping is investigated. Whereas corrosion scarcely occurs when nitrous acid is 0 ppm, the pitting corrosion growth rate in a crevice is accelerated to 1 mm/8,000 h when nitrous acid is 1 ppm. Consequently, it is estimated that crevice corrosion is accelerated in a 12Cr-steel for a low-pressure turbine rotor blade material too.

As explained above, according to the present embodiment, in a plant such as a thermal power plant, the corrosion of a piping member and a device such as a boiler can be prevented by effectively decomposing nitrogen monoxide (NO) contained in waste water or condensate water and inhibiting the generation of nitrous acid (HNO₂).

In a stainless steel, the generation of pitting corrosion and crevice corrosion as well as stress corrosion cracking can be inhibited. Further, in a carbon steel or a low-alloy steel, general corrosion, pitting corrosion, and crevice corrosion can be inhibited.

Further, a carbon steel or a low-alloy steel can be used and a plant manufacturing cost can be reduced by applying the present invention also to a device that has heretofore been requiring or will hereafter require a stainless steel to be applied in order to avoid corrosion caused by nitrous acid.

Furthermore, water quality degradation of feed water can be prevented and the corrosion of a boiler caused by nitrous acid can be inhibited by preventing the nitrous acid from being brought in the feed water of the boiler from a feed water heater. In addition, the load of a condensate water desalination unit can be reduced and thus the reduction of regeneration frequency and the degradation of a resin can be prevented by preventing nitrous acid from being brought in condensate water from a low-pressure turbine.

### [Second Embodiment]

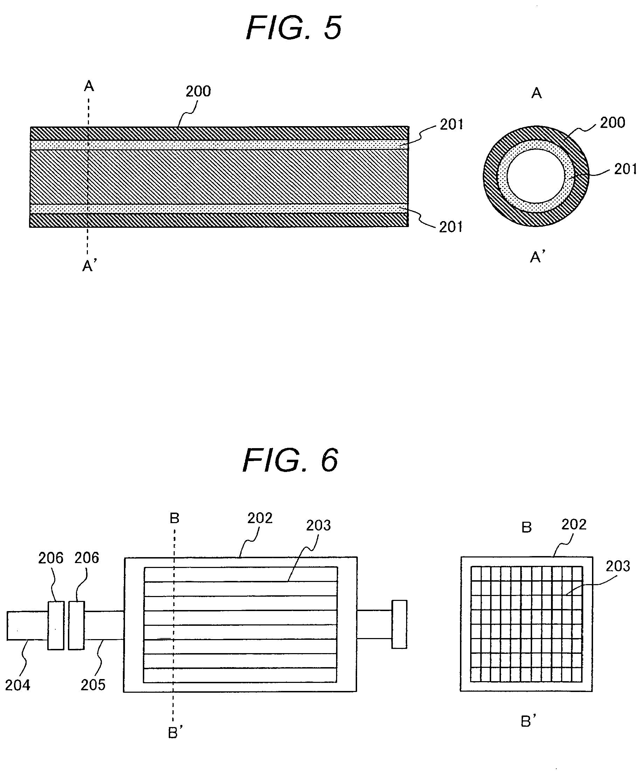

A piping member according to a second embodiment is explained in reference to Fig. 5. Fig. 5 is a view formed by applying a chromium (Cr) plating 201 on the inner surface of a steel pipe 200. As explained in the first embodiment, in a plant such as a thermal power plant, when nitrous acid (HNO₂) is contained in waste water or condensate water, a piping member and a device such as a boiler are likely to corrode. By using a piping member of Fig. 5 as the pipes 30 to 41 in the thermal power generation system shown in Fig. 1 therefore, nitrogen monoxide (NO) in waste water or condensate water is effectively decomposed by the chromium (Cr) plating 201 applied on the inner surface and the generation of nitrous acid can be inhibited.

As a result, in a plant such as a thermal power plant, by effectively decomposing nitrogen monoxide (NO) contained in waste water or condensate water and inhibiting nitrous acid from being generated, the corrosion of a piping member and a device such as a boiler can be prevented.

Here, as explained in the first embodiment, the chromium (Cr) plating 201 applied on the inner surface of the steel pipe 200 functions as a catalyst when nitrogen monoxide (NO) is decomposed. As materials having a high catalytic effect, copper (Cu), cobalt (Co), nickel (Ni), magnesium (Mg), manganese (Mn), zinc (Zn), vanadium (V), titanium (Ti), aluminum (Al), ruthenium (Ru), and iron (Fe) may be used in addition to chromium (Cr).

### [Third Embodiment]

A nitrogen monoxide cracking unit according to a third embodiment is explained in reference to Fig. 6. Fig. 6 shows the outline of a nitrogen monoxide cracking unit 202 of a honeycomb structure. By using the nitrogen monoxide cracking unit of Fig. 6 as each of the nitrogen monoxide cracking units 100 to 103 in the thermal power generation system shown in Fig. 1, nitrogen monoxide (NO) in waste water or condensate water can be decomposed effectively by a chromium (Cr) plating 203 applied to the honeycomb structure installed in the interior of the nitrogen monoxide cracking unit 202 and the corrosion of nitrous acid (HNO₂) can be inhibited.

The nitrogen monoxide cracking unit 202 is connected by attaching a flange 206 of a device side pipe 205 to a flange 206 of a plant side pipe 204. The decomposition of nitrogen monoxide is accelerated by making the flow passage area of the nitrogen monoxide cracking unit 202 larger than the flow passage area of the plant side pipe 204 and thus reducing a steam flow rate. Further, by adopting a honeycomb structure as the inner structure, the area touching steam increases and decomposition reaction is accelerated.

As a result, in a plant such as a thermal power plant, the corrosion of a piping member and a device such as a boiler can be prevented by effectively decomposing nitrogen monoxide (NO) contained in waste water or condensate water and inhibiting the generation of nitrous acid.

Here, in the present embodiment too, copper (Cu), cobalt (Co), nickel (Ni), magnesium (Mg), manganese (Mn), zinc (Zn), vanadium (V), titanium (Ti), aluminum (Al), ruthenium (Ru), and iron (Fe) and be used in addition to chromium (Cr).

### [Fourth Embodiment]

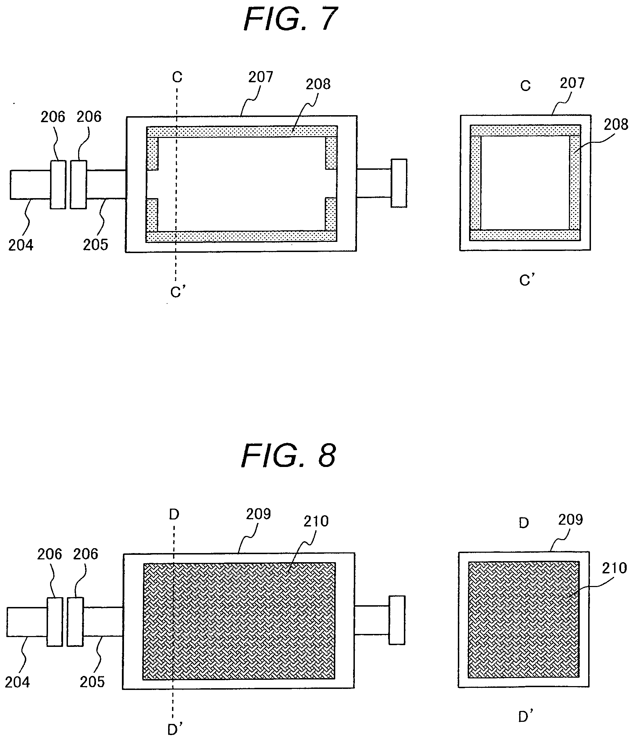

A nitrogen monoxide cracking unit according to a fourth embodiment is explained in reference to Fig. 7. Fig. 7 shows the outline of a nitrogen monoxide cracking unit 207 on the inner wall of which a chromium (Cr) plating 208 is applied. In the same manner as the third embodiment, by using the nitrogen monoxide cracking unit of Fig. 7 as each of the nitrogen monoxide cracking units 100 to 103 in the thermal power generation system shown in Fig. 1, nitrogen monoxide (NO) in waste water or condensate water can be decomposed effectively by the chromium (Cr) plating 208 applied to the interior of the nitrogen monoxide cracking unit 207 and the generation of nitrous acid (HNO₂) can be inhibited.

In the nitrogen monoxide cracking unit 207 of Fig. 7, since the width of the cross section C-C' is larger than the width (diameter) of a plant side pipe 204, steam flow stagnates in the interior of the nitrogen monoxide cracking unit 207, a steam flow rate reduces, and thereby the decomposition of nitrogen monoxide is accelerated.

### [Fifth Embodiment]

A nitrogen monoxide cracking unit according to a fifth embodiment is explained in reference to Fig. 8. Fig. 8 shows the outline of a nitrogen monoxidecracking unit 209 in the interior of which a steel-wool-like mesh, to which a chromium (Cr) plating 210 is applied, is installed. In the same manner as the third embodiment, by using the nitrogen monoxide cracking unit of Fig. 8 as each of the nitrogen monoxide cracking units 100 to 103 in the thermal power generation system shown in Fig. 1, nitrogen monoxide (NO) in waste water or condensate water can be decomposed effectively by the chromium (Cr) plating 210 applied to the mesh installed in the interior of the nitrogen monoxide cracking unit 209 and the generation of nitrous acid (HNO₂) can be inhibited.

Further, in the nitrogen monoxide cracking unit 209 of Fig. 8, since the width of the cross section D-D' is larger than the width (diameter) of a plant side pipe 204, in the same manner as Fig. 7, steam flow stagnates in the interior of the nitrogen monoxide cracking unit 209, a steam flow rate reduces, and thereby the decomposition of nitrogen monoxide is accelerated.

Here, the catalyst shown in each of the embodiments may be a single body of a metal element or an oxide, or a combination of metal elements or oxides.

Here, the present invention is not limited to the aforementioned embodiments and includes various modifications. For example, the aforementioned embodiments are explained in detail for making the present invention easy to understand and the present invention is not necessarily limited to the cases having all the explained configurations. Further, it is possible to: replace a part of the configuration of an embodiment with the configuration of another embodiment; or add the configuration of an embodiment to the configuration of another embodiment. Furthermore, it is possible to add, delete, or replace a part of the configuration of an embodiment to, from, or with the configuration of another embodiment.

### DESCRIPTION OF THE REFERENCE NUMERALS

- 1: Condensate water desalination unit
- 2: Low-pressure feed water heater
- 3: Deaerator
- 4: High-pressure feed water heater
- 5: Boiler
- 6: Heater
- 7: Reheater
- 8: High-pressure turbine
- 9: Intermediate pressure turbine
- 10: Low-pressure turbine
- 11: Condenser
- 12: Electric generator
- 30 to 41: Pipe
- 42: Chemical injection point
- 100, 101, 102, 103, 202, 207, 209: Nitrogen monoxide cracking unit
- 200: Steel pipe
- 201, 203, 208, 210: Chromium (Cr) plating
- 204: Plant side pipe
- 205: Device side pipe
- 206: Flange

## Claims

1. A use of a nitrogen monoxide cracking unit (100-103, 202, 207, 209) installed in a feed water system or a waste water system of a plant for decomposing nitrogen monoxide in a fluid by reacting nitrogen monoxide with ammonia in a gaseous phase and forming nitrogen and water,
**characterized in that** a catalyst (201, 203, 208, 210) to accelerate decomposition of nitrogen monoxide is installed in the interior of the nitrogen monoxide cracking unit (200, 202, 207, 209), and the nitrogen monoxide cracking unit (200, 202, 207, 209) is used to carry out the decomposition reaction of the nitrogen monoxide where the fluid pressure comes to be the lowest, i.e., before the sites where steam condenses as it enters a low-pressure turbine (10) and feed water heaters (2, 4) of the plant.

2. The use of the nitrogen monoxide cracking unit (100-103, 202, 207, 209) according to Claim 1, wherein the catalyst (201, 203, 208, 210) contains at least one or more kinds selected from the metal elements of Cr, Cu, Co, Ni, Mg, Mn, Zn, V, Ti, Al, Ru, and Fe or an oxide of the metal element(s).

3. The use of the nitrogen monoxide cracking unit (202) according to Claim 1 or 2, wherein the interior of the nitrogen monoxide cracking unit (202) has a honeycomb structure and the catalyst (203) is installed on a surface of the honeycomb structure.

4. The use of the nitrogen monoxide cracking unit (209) according to Claim 1 or 2, wherein a steel-wool-like mesh is installed in the interior of the nitrogen monoxide cracking unit (209) and the catalyst (210) is installed in the mesh.

5. The use of the nitrogen monoxide cracking unit (100, 101, 102, 103) for decomposing nitrogen monoxide in a fluid according to any one of Claim 1 to 4 in a power generation system to generate electricity with a steam turbine.

## Patentansprüche

1. Verwendung einer Stickstoffmonoxid-Spaltanlage (100-103, 202, 207, 209), die in einem Zuführwassersystem oder einem Abwassersystem einer Anlage installiert ist, um Stickstoffmonoxid in einem Fluid durch Reaktion von Stickstoffmonoxid mit Ammoniak in einer Gasphase zu zersetzen und Stickstoff und Wasser zu bilden,
**dadurch gekennzeichnet, dass** ein Katalysator (201, 203, 208, 210) zur Beschleunigung der Zersetzung von Stickstoffmonoxid im Inneren der Stickstoffmonoxid-Spaltanlage (200, 202, 207, 209) installiert ist und die Stickstoffmonoxid-Spaltanlage (200, 202, 207, 209) dazu verwendet wird, die Zersetzungsreaktion des Stickstoffmonoxids dort durchzuführen, wo der Fluiddruck am niedrigsten ist, d.h., vor den Stellen, an denen der Dampf kondensiert, wenn er in die Niederdruckturbine (10) und die Zuführwassererhitzer (2, 4) der Anlage eintritt.

2. Verwendung der Stickstoffmonoxid-Spaltanlage (100-103, 202, 207, 209) nach Anspruch 1, wobei der Katalysator (201, 203, 208, 210) mindestens eine oder mehrere Arten, ausgewählt aus den Metallelementen Cr, Cu, Co, Ni, Mg, Mn, Zn, V, Ti, Al, Ru und Fe oder ein Oxid des/der Metallelemente(s), enthält.

3. Verwendung der Stickstoffmonoxid-Spaltanlage (202) nach Anspruch 1 oder 2, wobei das Innere der Stickstoffmonoxid-Spaltanlage (202) eine Wabenstruktur aufweist und der Katalysator (203) auf einer Oberfläche der Wabenstruktur installiert ist.

4. Verwendung der Stickstoffmonoxid-Spaltanlage (209) nach Anspruch 1 oder 2, wobei im Inneren der Stickstoffmonoxid-Spaltanlage (209) ein stahlwolleartiges Gitter installiert ist und der Katalysator (210) in dem Gitter installiert ist.

5. Verwendung der Stickstoffmonoxid-Spaltanlage (100, 101, 102, 103) zur Zersetzung von Stickstoffmonoxid in einem Fluid nach einem der Ansprüche 1 bis 4 in einem Energieerzeugungssystem zur Erzeugung von Elektrizität mit einer Dampfturbine.

## Revendications

1. Utilisation d'une unité (100-103, 202, 207, 209) de craquage de monoxyde d'azote installée dans un système d'eau d'alimentation ou un système d'eaux usées d'une usine pour décomposer du monoxyde d'azote dans un fluide en faisant réagir du monoxyde d'azote avec de l'ammoniac en une phase gazeuse et pour former de l'azote et de l'eau,
**caractérisée en ce qu'**un catalyseur (201, 203, 208, 210) pour accélérer la décomposition du monoxyde d'azote est installé dans l'intérieur de l'unité (200, 202, 207, 209) de craquage de monoxyde d'azote et l'unité (200, 202, 207, 209) de craquage de monoxyde d'azote est utilisée pour exécuter la réaction de décomposition du monoxyde d'azote où la pression de fluide vient à être la plus basse, à savoir avant les sites où de la vapeur condense lorsqu'elle pénètre dans une turbine basse pression (10) et des réchauffeurs (2, 4) d'eau d'alimentation de l'usine.

2. Utilisation de l'unité (100-103, 202, 207, 209) de craquage de monoxyde d'azote selon la revendication 1, dans laquelle le catalyseur (201, 203, 208, 210) contient au moins une ou plusieurs espèces choisies parmi les éléments métal de Cr, Cu, Co, Ni, Mg, Mn, Zn, V, Ti, Al, Ru, et Fe ou un oxyde du (des) élément(s) métal.

3. Utilisation de l'unité (202) de craquage de monoxyde d'azote selon la revendication 1 ou 2, dans laquelle l'intérieur de l'unité (202) de craquage de monoxyde d'azote a une structure en nid d'abeilles et le catalyseur (203) est installé sur une surface de la structure en nid d'abeilles.

4. Utilisation de l'unité (209) de craquage de monoxyde d'azote selon la revendication 1 ou 2, dans laquelle un treillis de type laine d'acier est installé dans l'intérieur de l'unité (209) de craquage de monoxyde d'azote et le catalyseur (210) est installé dans le treillis.

5. Utilisation de l'unité (100, 101, 102, 103) de craquage de monoxyde d'azote pour décomposer du monoxyde d'azote dans un fluide selon l'une quelconque des revendications 1 à 4 dans un système de génération de puissance pour générer de l'électricité avec une turbine à vapeur.
